(19) **Europäisches Patentamt European Patent Office Office européen des brevets**

(11) **EP 1 354 219 B1**

(12) **FASCICULE DE BREVET EUROPEEN**

(45) Date de publication et mention de la délivrance du brevet:
**07.05.2008 Bulletin 2008/19**

(51) Int Cl.:
***G01S 3/48*** (2006.01)

(21) Numéro de dépôt: **01993832.3**

(22) Date de dépôt: **02.11.2001**

(86) Numéro de dépôt international:
**PCT/EP2001/012693**

(87) Numéro de publication internationale:
**WO 2002/039137 (16.05.2002 Gazette 2002/20)**

(54) **SYSTEME DE SURVEILLANCE DES PNEUMATIQUES D'UN VEHICULE COMPORTANT UN DISPOSITIF DE LOCALISATION AUTOMATIQUE D'EMETTEURS DE ROUES**

**SYSTEM ZUR ÜBERWACHUNG VON REIFEN EINES FAHRZEUGS MIT EINER EINRICHTUNG ZUM AUTOMATISCHEN FINDEN VON RADSENDERN**

**SYSTEM FOR MONITORING TYRES OF A VEHICLE COMPRISING A DEVICE AUTOMATICALLY LOCATING WHEEL TRANSMITTERS**

(84) Etats contractants désignés:
**AT BE CH CY DE DK ES FI FR GB GR IE IT LI LU MC NL PT SE TR**

(30) Priorité: **10.11.2000 FR 0014752**

(43) Date de publication de la demande:
**22.10.2003 Bulletin 2003/43**

(73) Titulaires:
• **Société de Technologie Michelin 63000 Clermont-Ferrand Cedex 09 (FR)**
• **Michelin Recherche et Technique S.A. 1763 Granges-Paccot (CH)**

(72) Inventeur: **BOULOT, Jean-Francis F-63430 Pont du Château (FR)**

(74) Mandataire: **Dequire, Philippe Jean-Marie Denis M.F.P. Michelin, SGD/LG/PI-F35-Ladoux 63040 Clermont-Ferrand Cedex 09 (FR)**

(56) Documents cités:
**EP-A- 1 004 461          EP-A- 1 059 177
WO-A-94/20317          WO-A-97/06968
GB-A- 2 168 812          US-A- 4 305 074
US-A- 5 075 694          US-A- 5 774 047**

• **ALLAN R: "WIRELESS TRANCEIVER WITH MICROMACHINED SENSOR DETECTS BOTH TIRE PRESSURE AND TEMPERATURE" ELECTRONIC DESIGN,US,PENTON PUBLISHING, CLEVELAND, OH, vol. 44, no. 26, 16 décembre 1996 (1996-12-16), page 40 XP000682028 ISSN: 0013-4872**

**Description**

L'invention concerne les dispositifs de localisation automatique de la position d'un émetteur radio et particulièrement d'un émetteur radio disposé dans une roue de véhicule.

Les systèmes de surveillance de la pression des pneumatiques d'un véhicule comportent usuellement des modules de roue avec émetteur radio incorporé transmettant régulièrement à une unité centrale des données issues de capteurs, notamment pression de gonflage et température, ainsi qu'un code d'identification. Les modules de roue sont disposés dans chaque ensemble roue-pneumatique du véhicule et l'unité centrale se trouve dans le châssis du véhicule. Chaque module de roue a un code d'identification qui lui est propre.

A titre d'exemple, la demande de brevet WO 94/20317 présente un tel système.

Pour pouvoir fonctionner correctement, l'unité centrale doit avoir stocké en mémoire les positions des modules de roues sur le véhicule avec leurs codes d'identification. Cela est indispensable pour contrôler l'origine des signaux reçus et ainsi éviter des interférences avec d'éventuels autres véhicules équipés de façon similaire. C'est aussi indispensable pour pouvoir indiquer le pneumatique concerné par un défaut, une perte de pression par exemple.

Dans le cas des dispositifs similaires à celui de la demande WO 94/20317, cette identification est réalisée manuellement lors de la première mise en service du système.

La demande WO 97/06968 décrit un dispositif de surveillance des pneumatiques d'un véhicule dans lequel l'unité centrale est connectée à quatre récepteurs disposés chacun directement en regard de l'une des quatre roues du véhicule. En fonction de la puissance du signal radio reçu, il est aisé de déterminer quel est l'émetteur à l'origine du signal reçu. Ce dispositif a cependant l'inconvénient de devoir disposer quatre récepteurs à proximité immédiate des quatre roues et de devoir connecter électriquement ces récepteurs à l'unité centrale. Cela rend coûteuse l'installation d'un tel système dans un véhicule.

Le document US-A-5 774 047 divulgue un système correspondant au préambule de la revendication 1.

L'invention a pour objet un premier système de surveillance des pneumatiques d'un véhicule ayant deux essieux, chaque essieu étant équipé d'un ensemble pneumatique-roue et les deux ensembles pneumatique-roue définissant un axe D1, comportant un module de roue disposé dans chacun des ensembles pneumatique-roue avec un émetteur radio émettant des ondes de fréquence F, supérieure à 300 MHz, par courtes impulsions, une unité centrale de traitement des informations émises par les émetteurs des modules de roue, et un dispositif de localisation automatique de la position sur le véhicule desdits émetteurs radio destiné à être disposé dans le châssis du véhicule. Ce système est tel que le dispositif de localisation automatique comprend :

- une première chaîne de réception radio avec une première antenne ;
- une seconde chaîne de réception radio avec une seconde antenne, lesdites première et seconde antennes définissant un axe destiné à être disposé sensiblement parallèlement à D1 et étant séparées d'une distance d telle que, λ étant la longueur d'onde de la fréquence F des émissions radio desdits émetteurs, d satisfait la relation suivante :

$$(2n+1)\,\lambda/4 - \lambda/8 \leq d \leq (2n+1)\,\lambda/4 + \lambda/8,\ n\ \text{étant un entier},\ n \geq 0\ ;$$

- des premiers moyens de comparaison des phases d'un signal radio reçu par les première et seconde antennes pour déterminer si le signal radio reçu par la première antenne est en avance de phase, en retard de phase ou a une phase identique relativement au signal radio reçu par la seconde antenne ; et
- des moyens de traitement des résultats issus des premier moyens de comparaison destinés à donner la position dudit émetteur radio relativement audites antennes.

Ce premier système est particulièrement destiné à un véhicule deux roues.

Ce dispositif n'utilise pas pour déterminer la provenance d'un signal radio les solutions radio goniométriques classiques (doppler, antennes rotatives, etc.) bien que très précises en raison de leur coût mais aussi en raison de leurs difficultés à déterminer la position d'une émission de quelques millisecondes.

Ce dispositif analyse la phase relative de signaux provenant de deux antennes de réception. La phase relative de ces signaux peut être déterminée sans ambiguïté à cause de l'espacement connu des deux antennes de réception. Cet espacement d est de préférence égal à λ/4.

L'invention a aussi pour objet un système de surveillance des pneumatiques d'un véhicule ayant deux essieux, chaque essieu étant équipé de deux ensembles pneumatique-roue et les quatre ensembles pneumatique-roue définissant deux diagonales D1 et D2, comportant un module de roue disposé dans chacun des ensembles pneumatique-roue avec un émetteur radio émettant des ondes de fréquence F, supérieure à 300 MHz, par courtes impulsions, une unité centrale de traitement des informations émises par les émetteurs des modules de roue, et un dispositif de localisation automatique de la position sur le véhicule desdits émetteurs radio destiné à être disposé dans le châssis du véhicule. Ce second système est tel que le dispositif de localisation automatique comprend :

- une première chaîne de réception radio avec une première antenne ;
- une seconde chaîne de réception radio avec une seconde antenne, lesdites première et seconde antennes définissant un axe destiné à être disposé sensiblement parallèlement à D1 et étant séparées d'une distance d telle que, λ étant la longueur d'onde de la fréquence F des émissions radio desdits émetteurs, d satisfait la relation suivante :

$$(2n+1)\ \lambda/4 - \lambda/8 \leq d \leq (2n+1)\ \lambda/4 + \lambda/8,\ \text{n étant un entier, n} \geq 0\ ;$$

- des premiers moyens de comparaison des phases d'un signal radio reçu par les première et seconde antennes pour déterminer si le signal radio reçu par la première antenne est en avance de phase, en retard de phase ou a une phase identique relativement au signal radio reçu par la seconde antenne ;
- une troisième chaîne de réception radio avec une troisième antenne ;
- une quatrième chaîne de réception radio avec une quatrième antenne, lesdites troisième et quatrième antennes définissant un axe destiné à être disposé sensiblement parallèlement à D2 et étant séparées d'une distance d' telle que, λ étant la longueur d'onde de la fréquence F des émissions radio desdits émetteurs, d' satisfait la relation suivante :

$$(2n+1)\ \lambda/4 - \lambda/8 \leq d' \leq (2n+1)\ \lambda/4 + \lambda/8,\ \text{n étant un entier, n} \geq 0\ ;$$

- des second moyens de comparaison des phases d'un signal radio reçu par les troisième et quatrième antennes pour déterminer si le signal radio reçu par la troisième antenne est en avance de phase, en retard de phase ou a une phase identique relativement au signal radio reçu par la quatrième antenne ; et
- des moyens de traitement des résultats issus des premier et second moyens de comparaison destinés à donner la position dudit émetteur radio dudit signal relativement audites antennes.

Ce second système est particulièrement destiné aux véhicules à quatre roues.

Selon un mode de réalisation avantageux, les première et troisième chaînes de réception radio sont communes.

Comme précédemment, les distances d et d' séparant chaque paire d'antennes sont, de préférence, sensiblement égales à λ/4.

Ce dispositif de localisation automatique permet de déterminer aisément la position d'un émetteur radio disposé sensiblement selon l'axe D1 ou l'axe D2. Les antennes étant espacées d'une distance égale au quart de la longueur d'onde, les signaux radio reçus par deux antennes coopérantes seront déphasés l'un par rapport à l'autre d'une valeur proche de 90 degrés.

Lorsque le dispositif est monté sur un véhicule équipé de deux essieux et quatre roues, il est avantageux de disposer les deux axes définis par les deux paires d'antennes sensiblement selon les diagonales D1 et D2 des quatre roues. Les moyens de traitement du dispositif peuvent alors aisément indiquer l'origine du signal radio reçu. L'axe sur lequel est situé l'émetteur de roue est donné par le couple d'antennes coopérantes qui reçoit des signaux déphasés de 90 degrés ; et le quadrant du plan contenant D1 et D2 où se trouve l'émetteur est donné par l'antenne qui reçoit un signal en avance de phase.

Ce principe est tout à fait applicable aux systèmes de surveillance de la pression des pneumatiques car, compte tenu de la position des antennes relativement aux émetteurs, une précision de $\pm$ 45 degrés est suffisante. Ce dispositif a aussi l'avantage de permettre une localisation des signaux fiable, même avec des signaux correspondant à des courtes impulsions, soit de durée très courte, quelques millisecondes par exemple.

Le système selon l'invention a aussi l'avantage de vérifier en permanence la bonne position relative des roues. Il peut réaffecter automatiquement les codes d'identification des modules de roue aux bonnes positions dans la mémoire de l'unité centrale.

Pour augmenter la fiabilité de la détermination, les moyens de traitement du dispositif peuvent n'indiquer que l'émetteur radio est disposé relativement à un axe D1, respectivement D2, du côté d'une antenne donnée, seulement si les seconds, respectivement premiers, moyens de comparaison enregistrent que les signaux reçus par la paire d'antennes correspondante sont sensiblement en phase.

Selon une caractéristique avantageuse les moyens de traitement indiquent « signal nul » lorsque les premiers et seconds moyens de comparaison enregistrent tous les deux que les signaux reçus par les paires d'antennes correspondantes ont sensiblement le même déphasage.

Cela permet d'identifier, par exemple, que le signal radio reçu provient d'un émetteur radio disposé dans la roue de secours du véhicule lorsque celle-ci en est équipée. En effet, les roues de secours sont le plus souvent disposées sensiblement à l'avant ou à l'arrière du véhicule au centre de celui-ci.

La fréquence d'émission des émetteurs radio des modules de roue est supérieure à 300 MHz. Dans le cas de fréquences inférieures à cette valeur, le principe selon l'invention ne peut plus s'appliquer aisément en raison de la taille trop importante de la distance qui doit séparer les antennes coopérantes. En revanche, pour une fréquence de 433 MHz par exemple, la longueur d'onde des signaux est de l'ordre de 70 cm, la distance d ($\lambda/4$) est alors de 17 cm et peut être réduite à 8 cm ($\lambda/8$). Cela permet d'inclure l'ensemble du dispositif dans un boîtier de très petites dimensions, 10x10x3 cm de côtés par exemple. Un tel dispositif peut aussi incorporer l'unité centrale du système de surveillance et toutes ses fonctions, y compris la fonction de contrôle et d'envoi des données à un afficheur dans l'habitacle.

De préférence, les antennes comportent un bobinage hélicoïdal tel que la longueur développée du fil du bobinage est sensiblement égale au quart de la longueur d'onde de la fréquence des émetteurs radio. Avantageusement, les bobinages des antennes ont leurs axes destinés à être disposés sensiblement perpendiculairement aux axes D1 et D2.

Le dispositif de localisation est de préférence disposé dans le châssis du véhicule au centre de celui-ci. Une position privilégiée est sous le châssis. Un autre position avantageuse est de le disposer dans la partie centrale du plafond de l'habitable du véhicule.

Selon un mode de réalisation avantageux, l'une des chaînes de réception du signal radio du dispositif de localisation est utilisée pour recevoir et décoder les informations provenant du module de roue émetteur à l'unité centrale.

On peut aussi disposer une chaîne de réception complémentaire pour recevoir et décoder les informations du module de roue émetteur à l'unité centrale.

Plusieurs modes de réalisation de l'invention sont maintenant décrits avec l'aide du dessin annexé dans lequel :

- la figure 1 présente schématiquement l'implantation dans un véhicule à quatre roues d'un système de surveillance des pneumatiques selon l'invention ;
- la figure.2 présente, dans le cas d'un véhicule à quatre roues, la position des antennes de réception d'un dispositif à quatre antennes ;
- la figure 3 présente le principe de la localisation par mesure du déphasage;
- la figure 4 illustre les signaux captés ainsi que leurs déphasages ;
- la figure 5 présente le diagramme d'un premier dispositif de localisation selon l'invention ;
- la figure 6 présente le diagramme d'un second dispositif de localisation selon l'invention ;
- la figure 7 présente le diagramme d'un troisième dispositif de localisation selon l'invention avec trois antennes de réception ; et
- la figure 8 présente, dans le cas d'un véhicule à quatre roues, la disposition des antennes de réception d'un dispositif à trois antennes.

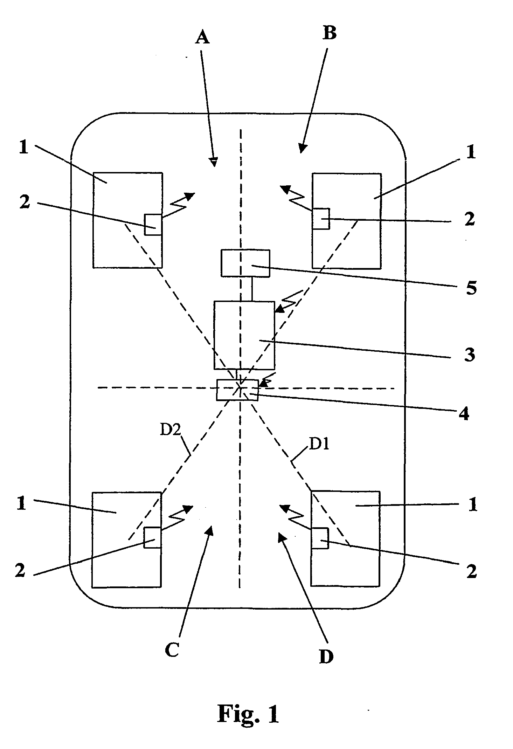

La figure 1 présente schématiquement l'implantation dans un véhicule à deux essieux et quatre roues d'un système de surveillance des pneumatiques selon l'invention. Le véhicule comporte quatre ensembles pneumatique-roue 1. Le système de surveillance des pneumatiques comprend un module de roue 2 disposé à l'intérieur de la cavité interne de chaque pneumatique 1 et équipé notamment d'un émetteur radio et de capteurs de pression et de température, une unité centrale 3, un dispositif de localisation automatique 4 d'émetteurs radio et un afficheur 5. L'unité centrale 3 et le dispositif de localisation automatique sont disposés dans le châssis du véhicule et l'afficheur 5 est placé dans l'habitacle. Les centres des ensembles pneumatique-roue définissent deux diagonales D1 et D2 et le châssis est divisé en quatre quadrants A, B, C et D tel que représenté sur la figure. Dans l'exemple de la figure 1, l'unité centrale 3 et le dispositif de localisation automatique 4 sont tous les deux équipés de chaînes de réception et/ou émission radio. Dans ce cas, le dispositif 4 ne sert qu'à identifier la localisation du module de roue émetteur des signaux reçus. Il est aussi possible d'intégrer plus complètement les deux modules en, notamment, utilisant l'une des chaînes de réception radio du dispositif 4 pour recevoir et transmettre les signaux à l'unité centrale 3. De même, on a représenté ici les deux modules 3 et 4 comme des éléments séparés, il est tout à fait possible de les intégrer dans un même boîtier.

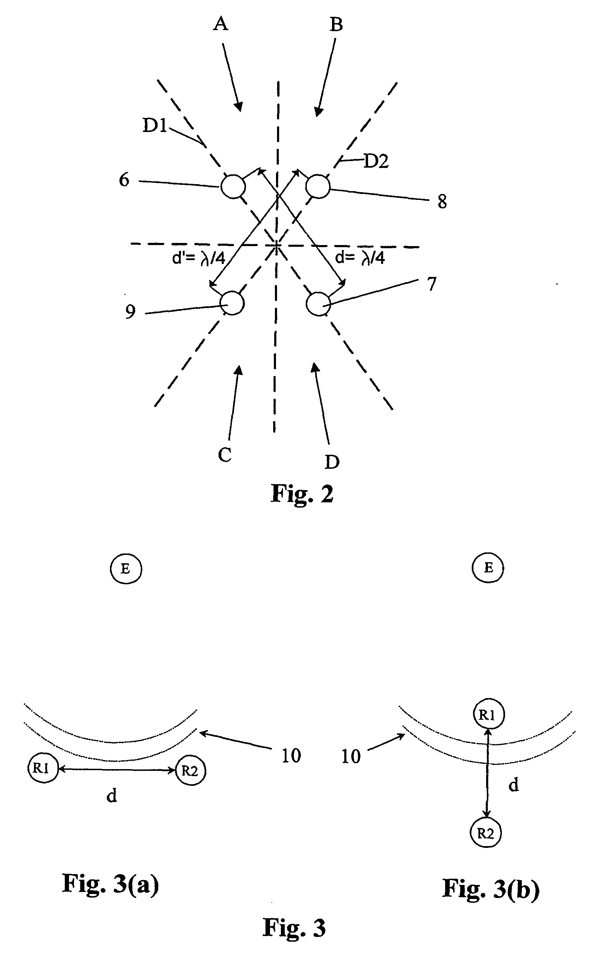

La figure 2 présente schématiquement l'implantation des quatre antennes de réception dans le cas d'un véhicule à quatre roues. Cette figure est un agrandissement de l'élément 4 de la figure 1. Les antennes 6, 7, 8 et 9 sont disposées près du centre du véhicule, dans le châssis et de préférence sous celui-ci pour faciliter la transmission des signaux radio entre les émetteurs disposés dans les roues et les antennes de réception. Les quatre antennes sont placées deux par deux, l'antenne 6 et l'antenne 7 sont sensiblement selon l'axe D1 reliant en diagonale les axes de deux des roues. Les antennes 8 et 9 sont sensiblement disposées selon le second axe D2 reliant en diagonale les axes des deux dernières roues. Une distance d égale au quart de la longueur d'onde des émissions radio sépare les antennes 6-7 ainsi que 8-9. Pour une fréquence de 433 MHz, la longueur d'onde est de 70 cm, d est donc de l'ordre de 15 à 18 cm. Les quatre antennes sont des antennes hélicoïdales, comportant un bobinage dont la longueur développée est aussi égale sensiblement au quart de la longueur d'onde d'émission radio. De telles antennes, dites antennes accordées, procurent un bon rendement avec une taille et un coût réduits.

Les quatre antennes sont pratiquement disposées en carré, chacune définit donc dans le plan des axes D1 et D2 un quadrant. L'antenne 6 est dans le quadrant A, l'antenne 7 - le quadrant D, l'antenne 8 - le quadrant B et l'antenne 9 - le quadrant C.

Le fait d'espacer deux antennes de cette distance (λ/4) provoque au plus un déphasage de réception des signaux de 90 degrés.

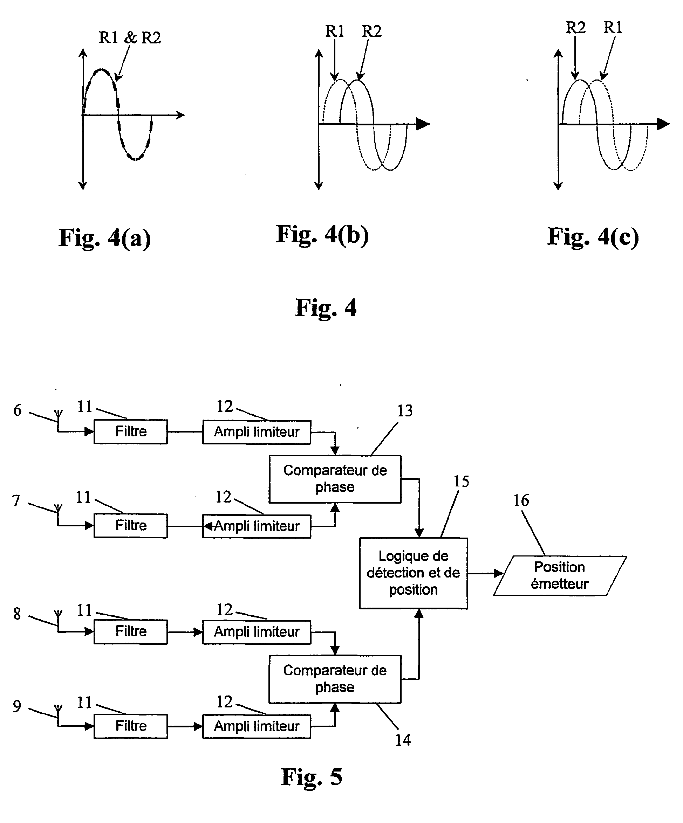

A la figure 3(a), on voit un émetteur E, les fronts d'onde 10 d'une émission radio de cet émetteur et deux antennes réceptrices disposées à la même distance de l'émetteur E. Comme l'indique la figure 4(a), les distances E-R1 et E-R2 étant identiques, les signaux reçus par R1 et R2 sont en phase.

La figure 3(b) illustre le cas où les deux récepteurs R1 et R2 sont disposés selon un axe passant par l'émetteur E. Dans ce cas les distances E-R1 et E-R2 sont différentes d'un quart de la longueur d'onde des signaux, il en résulte, comme le montrent les figures 3(b) et 4(b), que les signaux reçus par R1 sont en avance de phase de 90 degrés par rapport à ceux reçus par R2.

La figure 4(c) illustre le cas où l'émetteur E est disposé selon un axe passant par les deux récepteurs R1 et R2 mais est plus proche de R2 que de R1. Les signaux reçus par R2 sont alors en avance de phase de 90 degrés par rapport à ceux reçus par R1.

Après comparaison de leurs phases, les signaux sont traités par une logique de détection de position.

A titre d'exemple, chaque comparateur de phase coopérant avec une première et une seconde antennes produit un signal correspondant à :

- Source à égale distance des deux antennes = 0.
- Source plus proche de la première antenne = +1.
- Source plus proche de la seconde antenne = -1.

Le tableau ci-dessous indique la logique donnant le quadrant de l'émetteur des signaux reçus en liaison avec la figure 2 :

| Couple d'antennes 6/7 | Couple d'antennes 8/9 | Quadrant de l'émetteur de roue |
|---|---|---|
| +1 | 0 | A |
| 0 | +1 | B |
| 0 | -1 | C |
| -1 | 0 | D |

Tout signal dont la logique correspond à l'un des quatre cas du tableau est considéré comme valide. En revanche, toute autre combinaison est rejetée.

La figure 5 présente un premier diagramme d'un dispositif de localisation selon l'invention. Ce dispositif comprend quatre chaînes de réception du signal radio. Chacune est composée d'une antenne hélicoïdale 6, 7, 8, et 9, d'un filtre 11 et d'un ampli limiteur 12 destiné à normer l'amplitude des signaux. Deux comparateurs de phase reçoivent les signaux deux à deux. Le comparateur 13 compare les signaux reçus par les antennes 6 et 7 ; le comparateur 14, les signaux reçus par les antennes 8 et 9. Le dispositif comprend aussi des moyens de traitement 15 des données transmises par les deux comparateurs. Ces moyens de traitement, tel un microcalculateur, mettent en oeuvre la logique de détection et de position et transmettent à l'unité centrale (non représentée) du système de surveillance des pneumatiques la position de l'émetteur radio 16.

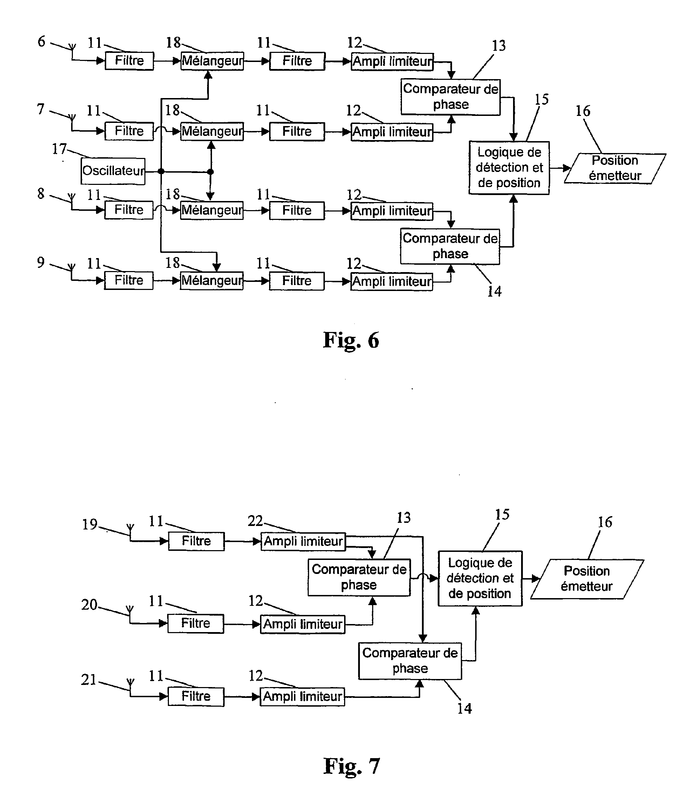

La figure 6 présente un second mode de réalisation dans lequel chaque chaîne comprend en plus un mélangeur de fréquence 18 relié à un oscillateur 17 commun. La sortie du mélangeur utilisée est la sortie F - F2, F étant la fréquence du signal radio et F2 la fréquence de l'oscillateur. Dans le cas d'une valeur de F de 433 MHz, on peut utiliser un mélangeur avec une fréquence de 423 MHz. F - F2 est alors de 10 MHz et le coût des comparateurs de phase est beaucoup plus réduit. Une telle chaîne de réception utilise le principe des récepteurs superhétérodynes.

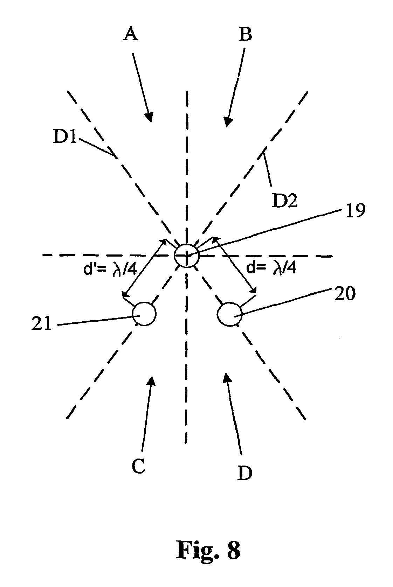

Les figures 7 et 8 présentent un dispositif de localisation selon l'invention pour véhicule à quatre roues comportant trois antennes au lieu de quatre.

La figure 8 illustre la position des trois antennes au centre du véhicule. Les axes D1 et D2 correspondant sensiblement aux deux diagonales reliant les roues deux à deux sont représentés sur la figure. L'antenne 19 est placée de préférence à l'intersection des deux axes D1 et D2, l'antenne 20 sur l'axe D1 et l'antenne 21 sur l'axe D2. Le premier couple d'antennes coopérantes est constitué des antennes 19 et 20 disposées sur D1. Le second couple est constitué des antennes 19 et 21 disposées sur D2. Comme précédemment, la distance d entre les antennes 19 et 20 est sensiblement égale à λ/4 ; la distance d' entre les antennes 19 et 21 est aussi égale sensiblement à λ/4.

La figure 7 présente un diagramme d'un tel dispositif. Ce diagramme est très proche de celui de la figure 5 avec une modification. La chaîne de réception comportant l'antenne 19 comprend un ampli limiteur 22 qui est relié aux deux comparateurs de phase 13 et 14 au lieu d'un seul comme précédemment. Cela permet de simplifier la réalisation de ce dispositif.

Le fonctionnement de ce dispositif avec trois antennes de réception est tout à fait similaire à celui des dispositifs précédents à quatre antennes.

Le fonctionnement d'un système de surveillance de la pression équipé d'un dispositif selon l'invention pour un véhicule à quatre roues est le suivant :

- on analyse le signal reçu par couple d'antennes en diagonale ;
- on détermine le couple d'antennes coopérantes qui reçoit des signaux déphasés de 90 degrés ; cela détermine l'axe D1 ou D2 sur lequel est situé l'émetteur de roue des signaux reçus ;
- dans ce couple d'antennes coopérantes, on détermine l'antenne qui reçoit un signal en avance de phase ; cela identifie le quadrant du plan contenant D1 et D2 où se trouve l'émetteur radio ;
- on vérifie avec une table de référence que la position de l'émetteur de roue concerné n'a pas changé ; et
- on transmet à l'unité centrale du système la position de l'émetteur de roue pour analyse et traitement des informations, notamment de pression et de température, incluses dans les signaux émis.

Pour fiabiliser l'identification, on peut n'indiquer la position de l'émetteur que si une antenne reçoit un signal en avance de phase et si l'autre paire d'antenne reçoit deux signaux de phases identiques.

Un traitement statistique est bien entendu nécessaire afin d'éliminer les réceptions de quelques échos parasites produits dans certaines positions azimutales de roue.

La distance d de la diagonale entre deux antennes peut être réduite à 1/8 de longueur d'onde soit 8 cm, sans trop affecter la précision du système.

L'une des chaînes de réception peut être utilisée pour la réception de l'ensemble des données des quatre émetteurs de roue et leur transmission à l'unité centrale du système.

Le dispositif de localisation selon l'invention a l'avantage de permettre une localisation automatique et sans intervention manuelle de la position respective de chaque émetteur de roue au moment de l'initialisation du système de surveillance de la pression des pneumatiques. L'unité centrale peut ainsi connaître et stocker les codes d'identification des quatre modules de roues utilisés par le véhicule concerné.

En fonctionnement normal du système de surveillance, le dispositif selon l'invention permet d'effectuer une surveillance permanente de ces codes d'identification. Cela peut permettre de programmer l'unité centrale pour qu'elle avertisse en cas de problème, par exemple, en cas de permutation involontaire de roues par un garage. On peut aussi prévoir une réinitialisation automatique du système de surveillance de pression après un changement de roue.

Le dispositif de l'invention peut être contenu dans un boîtier de petite taille. Il est de préférence placé au centre du véhicule, sous le châssis ou dans la partie centrale du plafond de l'habitacle. Ce boîtier peut aussi associer toutes les fonctions de surveillance des pneumatiques, c'est-à-dire incorporer l'unité centrale de traitement du système et communiquer directement avec le système d'affichage du véhicule.

**Revendications**

1. Système de surveillance des pneumatiques d'un véhicule ayant deux essieux, chaque essieu étant équipé d'un ensemble pneumatique-roue et les deux ensembles pneumatique-roue définissant un axe D1, comportant :

   ■ un module de roue disposé dans chacun des ensembles pneumatique-roue avec un émetteur radio émettant des ondes de fréquence F, de préférence par courtes impulsions,
   ■ une unité centrale de traitement des informations émises par les émetteurs des modules de roue, et
   ■ un dispositif de localisation automatique de la position sur le véhicule desdits émetteurs radio destiné à être disposé dans le châssis du véhicule comprenant :

      • une première chaîne de réception radio avec une première antenne ;
      • une seconde chaîne de réception radio avec une seconde antenne,

         • des premiers moyens de comparaison des phases d'un signal radio reçu par les première et seconde antennes pour déterminer si le signal radio reçu par la première antenne est en avance de phase, en retard de phase ou a une phase identique relativement au signal radio reçu par la seconde antenne ; et
• des moyens de traitement des résultats issus des premier moyens de comparaison destinés à donner la position dudit émetteur radio relativement audites antennes ;

**caractérisé en ce que** lesdites première et seconde antennes définissent un axe destiné à être disposé sensiblement parallèlement à D1 et sont séparées d'une distance d telle que, $\lambda$ étant la longueur d'onde de la fréquence F, supérieure à 300 MHz, des émissions radio desdits émetteurs, d satisfait la relation suivante :

$$(2n+1)\ \lambda/4 - \lambda/8 \leq d \leq (2n+1)\ \lambda/4 + \lambda/8,\ \text{n étant un entier, n} \geq 0.$$

**2.** Système selon la revendication 1, dans lequel d est sensiblement égal à $\lambda/4$.

**3.** Système de surveillance des pneumatiques d'un véhicule ayant deux essieux, chaque essieu étant équipé de deux ensembles pneumatique-roue et les quatre ensembles pneumatique-roue définissant deux diagonales D1 et D2, comportant

   ■ un module de roue disposé dans chacun des ensembles pneumatique-roue avec un émetteur radio émettant des ondes de fréquence F, de préférence par courtes impulsions,
   ■ une unité centrale de traitement des informations émises par les émetteurs des modules de roue, et
   ■ un dispositif de localisation automatique de la position sur le véhicule desdits émetteurs radio destiné à être disposé dans le châssis du véhicule comprenant :

      • une première chaîne de réception radio avec une première antenne ;
      • une seconde chaîne de réception radio avec une seconde antenne,
      • des premiers moyens de comparaison des phases d'un signal radio reçu par les première et seconde antennes pour déterminer si le signal radio reçu par la première antenne est en avance de phase, en retard de phase ou a une phase identique relativement au signal radio reçu par la seconde antenne ;
      • une troisième chaîne de réception radio avec une troisième antenne ;
      • une quatrième chaîne de réception radio avec une quatrième antenne,
      • des seconds moyens de comparaison des phases d'un signal radio reçu par les troisième et quatrième antennes pour déterminer si le signal radio reçu par la troisième antenne est en avance de phase, en retard de phase ou a une phase identique relativement au signal radio reçu par la quatrième antenne ; et
      • des moyens de traitement des résultats issus des premier et second moyens de comparaison destinés à donner la position dudit émetteur radio dudit signal relativement audites antennes ;

**caractérisé en ce que** lesdites première et seconde antennes définissent un axe destiné à être disposé sensiblement parallèlement à D1 et sont séparées d'une distance d telle que, $\lambda$ étant la longueur d'onde de la fréquence F, supérieure à 300 MHz, des émissions radio desdits émetteurs, d satisfait la relation suivante :

$$(2n+1)\ \lambda/4 - \lambda/8 \leq d \leq (2n+1)\ \lambda/4 + \lambda/8,\ \text{n étant un entier, n} \geq 0\ ;$$

 et **en ce que** lesdites troisième et quatrième antennes définissent un axe destiné à être disposé sensiblement parallèlement à D2 et sont séparées d'une distance d' telle que, $\lambda$ étant la longueur d'onde de la fréquence F, supérieure à 300 MHz, des émissions radio desdits émetteurs, d' satisfait la relation suivante :

$$(2n+1)\ \lambda/4 - \lambda/8 \leq d' \leq (2n+1)\ \lambda/4 + \lambda/8,\ \text{n étant un entier, n} \geq 0.$$

**4.** Système selon la revendication 3, dans lequel les troisième et première chaînes sont communes.

**5.** Système selon l'une des revendications 3 et 4, dans lequel les distances d et d' sont sensiblement égales à $\lambda/4$.

**6.** Système selon l'une des revendications 2 ou 5, dans lequel :

- lorsque les premiers moyens de comparaison déterminent que le signal radio reçu par la première antenne est en avance de phase relativement au signal radio reçu par la seconde antenne, les moyens de traitement indiquent que l'émetteur radio est disposé relativement à l'axe D1 du côté de la première antenne ; et
- lorsque les premiers moyens de comparaison déterminent que le signal radio reçu par la première antenne est en retard de phase relativement au signal radio reçu par la seconde antenne, les moyens de traitement indiquent que l'émetteur radio est disposé relativement à l'axe D1 du côté de la seconde antenne.

7.  Système selon la revendication 6, dans lequel lorsque les premiers moyens de comparaison déterminent que le signal radio reçu par les première et seconde antennes sont sensiblement en phase, les moyens de traitement indiquent que l'émetteur radio est disposé sensiblement à égale distance des première et seconde antenne.

8.  Système selon l'une des revendications 5 à 7, dans lequel :

- lorsque les seconds moyens de comparaison déterminent que le signal radio reçu par la troisième antenne est en avance de phase relativement au signal radio reçu par la quatrième antenne, les moyens de traitement indiquent que l'émetteur radio est disposé, relativement à l'axe D2, du côté de la troisième antenne ; et
- lorsque les seconds moyens de comparaison déterminent que le signal radio reçu par la troisième antenne est en retard de phase relativement au signal radio reçu par la quatrième antenne, les moyens de traitement indiquent que l'émetteur radio est disposé, relativement à l'axe D2, du côté de la quatrième antenne.

9.  Système selon la revendication 8, dans lequel, lorsque les seconds moyens de comparaison déterminent que les signaux radio reçus par les troisième et quatrième antennes sont sensiblement en phase, les moyens de traitement indiquent que l'émetteur radio est disposé sensiblement à égale distance des troisième et quatrième antennes.

10. Système selon l'une des revendications 5 à 9, dans lequel les moyens de traitement indiquent que l'émetteur radio est disposé relativement à un axe D1, respectivement D2, du côté d'une antenne donnée, seulement si les seconds, respectivement premiers, moyens de comparaison enregistrent que les signaux reçus par la paire d'antennes correspondante ont sensiblement le même déphasage.

11. Système selon l'une des revendications 5 à 10, dans lequel les moyens de traitement indiquent « signal nul » lorsque les premiers et seconds moyens de comparaison enregistrent tous les deux que les signaux reçus par les paires d'antennes correspondantes sont sensiblement en phase.

12. Système selon l'une des revendications 1 à 11, dans lequel lesdites antennes comportent un bobinage hélicoïdal tel que la longueur développée du fil du bobinage est sensiblement égale à $\lambda/4$.

13. Système selon la revendication 12, dans lequel lesdits bobinages desdites antennes ont leurs axes destinés à être disposés sensiblement perpendiculairement aux axes D1 et D2.

14. Système selon l'une des revendications 1 à 13, dans lequel chaque chaîne de réception comporte un ampli limiteur.

15. Système selon l'une des revendications 1 à 14, dans lequel chaque chaîne de réception comporte en plus un mélangeur de fréquence relié à un oscillateur local de fréquence F2 commun pour toutes les chaînes de réception du signal radio.

16. Système selon l'une des revendications 1 à 15, dans lequel l'une des chaînes de réception du signal radio du dispositif de localisation est utilisée pour recevoir et décoder les informations provenant du module de roue émetteur à l'unité centrale.

17. Système selon l'une des revendications 1 à 15, dans lequel une chaîne de réception complémentaire reçoit et décode les informations du module de roue émetteur à l'unité centrale.

18. Système selon l'une des revendications 1 à 17, dans lequel le dispositif de localisation est disposé dans la partie centrale du plafond de l'habitacle.

**Claims**

1. System for monitoring the tyres of a vehicle having two axles, each axle being equipped with a tyre-wheel assembly and the two tyre-wheel assemblies defining an axis D1 comprising:

  ■ a wheel unit disposed in each of the tyre-wheel assemblies with a radio transmitter transmitting waves of a frequency F, preferebly in short pulses,
  ■ a central unit for processing the data transmitted by the transmitters of the wheel units, and
  ■ a device for automatically locating the position on the vehicle of the radio transmitters, intended to be disposed in the chassis of the vehicle, comprising:

   • a first radio reception channel having a first aerial;
   • a second radio reception channel having a second aerial,

   • first means of comparison of the phases of a radio signal received by the first and second aerials in order to determine whether the radio signal received by the first aerial is ahead of phase, behind phase or has an identical phase relative to the radio signal received by the second aerial; and
   • means of processing the results transmitted by the first means of comparison intended to indicate the position of the radio transmitter relative to the said aerials.

  **characterized in that** the first and second aerials define an axis intended to be disposed substantially parallel to D1 and are separated by a distance d such that, λ being the wavelength of the frequency F, over 300 MHz, of the radio transmissions of the transmitters, d satisfies the following equation:

$$(2n+1)\lambda/4 - \lambda/8 \le d \le (2n+1)\lambda/4 + \lambda/8, \text{ n being an integer, } n \ge 0.$$

2. System according to claim 1, in which d is substantially equal to λ/4.

3. System for monitoring the tyres of a vehicle having two axles, each axle being equipped with two tyre-wheel assemblies and the four tyre-wheel assemblies defining two diagonals D1 and D2, comprising

  ■ a wheel unit disposed in each of the tyre-wheel assemblies with a radio transmitter transmitting waves of a frequency F preferably in short pulses,
  ■ a central unit for processing the data transmitted by the transmitters of the wheel units, and
  ■ a device for automatically locating the position on the vehicle of the radio transmitters, intended to be disposed in the chassis of the vehicle comprising:

   • a first radio reception channel having a first aerial;
   • a second radio reception channel having a second aerial,
   • first means of comparison of the phases of a radio signal received by the first and second aerials in order to determine whether the radio signal received by the first aerial is ahead of phase, behind phase or has an identical phase relative to the radio signal received by the second aerial;
   • a third radio reception channel having a third aerial;
   • a fourth radio reception channel having a fourth aerial:
   • second means of comparing the phases of a radio signal received by the third and fourth aerials in order to determine whether the radio signal received by the third aerial is ahead of phase, behind phase or has an identical phase relative to the radio signal received by the fourth aerial; and
   • means of processing the results originating from the first and second means of comparison intended to indicate the position of the radio transmitter of the signal relative to the said aerials;

  **characterized in that** the first and second aerials define an axis intended to be disposed substantially parallel to D1 and are separated by a distance d such that, λ being the wavelength of the frequency F, over 300 MHz, of the radio transmissions of the transmitters, d satisfies the following equation:

$$(2n+1)\lambda/4 - \lambda/8 \le d \le (2n+1)\lambda/4 + \lambda/8 \text{, n being an integer, n} \ge 0;$$

and **in that** the third and fourth aerials define an axis intended to be disposed substantially parallel to D2 and being separated by a distance d' such that, $\lambda$ being the wavelength of the frequency F, over 300 MHz, of the radio transmissions of the transmitters, d' satisfies the following equation:

$$(2n+1)\lambda/4 - \lambda/8 \le d' \le (2n+1)\lambda/4 + \lambda/8 \text{, n being an integer, n} \ge 0.$$

4. System according to claim 3, wherein the third and first channels are shared.

5. System according to one of claims 3 and 4, wherein the distances d and d' are substantially equal to $\lambda/4$.

6. System according to one of claims 2 or 5, wherein:

   • when the first means of comparison determine that the radio signal received by the first aerial is ahead of phase relative to the radio signal received by the second aerial, the processing means indicate that the radio transmitter is disposed on the side of the first aerial relative to the axis D1; and
   • when the first means of comparison determine that the radio signal received by the first aerial is behind phase relative to the radio signal received by the second aerial, the processing means indicate that the radio transmitter is disposed on the side of the second aerial relative to the axis D1.

7. System according to claim 6, wherein when the first means of comparison determine that the radio signal received by the first and second aerials are substantially in phase, the processing means indicate that the radio transmitter is disposed substantially at an equal distance from the first and second aerial.

8. System according to one of claims 5 to 7, wherein:

   • when the second means of comparison determine that the radio signal received by the third aerial is ahead of phase relative to the radio signal received by the fourth aerial, the processing means indicate that the radio transmitter is disposed on the side of the third aerial relative to the axis D2; and
   • when the second means of comparison determine that the radio signal received by the third aerial is behind phase relative to the radio signal received by the fourth aerial, the processing means indicate that the radio transmitter is disposed on the side of the fourth aerial relative to the axis D2.

9. System according to claim 8, wherein when the second means of comparison determine that the radio signals received by the third and fourth aerials are substantially in phase, the processing means indicate that the radio transmitter is disposed substantially at an equal distance from the third and fourth aerials.

10. System according to one of claims 5 to 9, wherein the processing means indicate that the radio transmitter is disposed, relative to an axis D1 or D2 respectively, on the side of a given aerial only if the second, or first, means of comparison record that the signals received by the corresponding pair of aerials have substantially the same phase shift.

11. System according to one of claims 5 to 10, wherein the processing means indicate "zero signal" when the first and second means of comparison both record that the signals received by the corresponding pairs of aerials are substantially in phase.

12. System according to one of claims 1 to 11, wherein the aerials comprise a helical winding such that the unwound length of the wire of the winding is substantially equal to $\lambda/4$.

13. System according to claim 12, wherein the windings of the aerials have their axes intended to be disposed perpendicular to the axes D1 and D2.

14. System according to one of claims 1 to 13, wherein each reception channel comprises a limiting amplifier.

15. System according to one of claims 1 to 14, wherein each reception channel further comprises a frequency mixer connected to a local oscillator of frequency F2, which oscillator is common to all reception channels of the radio signal.

16. System according to one of claims 1 to 15, wherein one of the reception channels of the radio signal of the locating device is used to receive and decode the data originating from the wheel unit transmitting to the central processing unit.

17. System according to one of claims 1 to 15, wherein a complementary reception channel receives and decodes the data from the wheel unit transmitting to the central processing unit.

18. System according to one of claims 1 to 17, wherein the locating device is disposed in the central part of the ceiling of the passenger cell.

**Patentansprüche**

1. System zum Überwachen der Luftreifen eines Fahrzeugs mit zwei Radachsen, wobei jede Radachse mit einer Luftreifen-Rad-Einheit ausgerüstet ist und die beiden Luftreifen-Rad-Einheiten eine Achse D1 definieren, mit:

    - einem Radmodul, das in jeder der Luftreifen-Rad-Einheiten angeordnet ist und einen Funksender besitzt, der Wellen mit einer Frequenz F vorzugsweise in Form kurzer Impulse aussendet,
    - einer Zentraleinheit für die Verarbeitung von Informationen, die von den Sendern der Radmodule ausgesendet werden, und
    - einer Vorrichtung zur automatischen Lokalisierung der Position der Funksender in dem Fahrzeug, die dazu vorgesehen ist, in der Karosserie des Fahrzeugs angeordnet zu werden, und enthält:

        - eine erste Funkempfangskette mit einer ersten Antenne;
        - eine zweite Funkempfangskette mit einer zweiten Antenne,
        - erste Mittel zum Vergleichen der Phasen eines von der ersten bzw. der zweiten Antenne empfangenen Funksignals, um zu bestimmen, ob das von der ersten Antenne empfangene Funksignal in Bezug auf das von der zweiten Antenne empfangene Funksignale ein voreilende Phase, eine nacheilende Phase oder die gleiche Phase besitzt; und
        - Mittel zum Verarbeiten der von den ersten Vergleichsmitteln ausgegebenen Ergebnisse, die dazu vorgesehen sind, die Position des Funksenders relativ zu den Antennen anzugeben;

    **dadurch gekennzeichnet, dass** die erste oder die zweite Antenne eine Achse definieren, die im Wesentlichen parallel zu D1 sein soll, und die um eine Strecke d beabstandet sind, derart, dass dann, wenn λ die Wellenlänge der Frequenz F von mehr als 300 MHz der Funkemissionen dieser Sender ist, d die folgende Beziehung erfüllt:

$$(2n + 1)\lambda/4 - \lambda/8 \leq d \leq (2n + 1)\lambda/4 + \lambda/8,$$

    wobei n eine ganze Zahl mit $n \geq 0$ ist.

2. System nach Anspruch 1, wobei d im Wesentlichen gleich λ/4 ist.

3. System zum Überwachen der Luftreifen eines Fahrzeugs mit zwei Radachsen, wobei jede Radachse mit zwei Luftreifen-Rad-Einheiten ausgerüstet ist und die vier Luftreifen-Rad-Einheiten zwei Diagonalen D1 und D2 definieren, mit

    - einem Radmodul, das in jeder der Luftreifen-Rad-Einheiten angeordnet ist und einen Funksender besitzt, der Wellen mit einer Frequenz F vorzugsweise in Form kurzer Impulse aussendet,
    - einer Zentraleinheit für die Verarbeitung von Informationen, die von den Sendern der Radmodule ausgesendet werden, und
    - einer Vorrichtung zum automatischen Lokalisieren der Position der Funksender in dem Fahrzeug, die dazu vorgesehen ist, im Rahmen des Fahrzeugs angeordnet zu werden, und enthält:
    - eine erste Funkempfangskette mit einer ersten Antenne;
    - eine zweite Funkempfangskette mit einer zweiten Antenne,

- erste Mittel zum Vergleichen der Phasen eines von der ersten bzw. von der zweiten Antenne empfangenen Funksignals, um zu bestimmen, ob das von der ersten Antenne empfangene Funksignal in Bezug auf das von der zweiten Antenne empfangene Funksignal eine voreilende Phase, eine nacheilende Phase oder die gleiche Phase hat;
- eine dritte Funkempfangskette mit einer dritten Antenne;
- eine vierte Funkempfangskette mit einer vierten Antenne;
- zweite Mittel zum Vergleichen der Phasen eines von der dritten bzw. von der vierten Antenne empfangenen Funksignals, um zu bestimmen, ob das von der dritten Antenne empfangene Funksignal in Bezug auf das von der vierten Antenne empfangene Funksignal eine voreilende Phase, eine nacheilende Phase oder die gleiche Phase hat; und
- Mittel zum Verarbeiten der Ergebnisse von den ersten bzw. den zweiten Vergleichsmitteln, die dazu vorgesehen ist, die Position des Funksenders des Signals relativ zu den Antennen anzugeben;

**dadurch gekennzeichnet, dass** die erste und die zweite Antenne eine Achse definieren, die im Wesentlichen parallel zu D1 sein soll, und die um eine Strecke d beabstandet sind, derart, dass dann, wenn $\lambda$ die Wellenlänge der Frequenz F von mehr als 300 MHz der Funkemissionen der Sender ist, d die folgende Beziehung erfüllt:

$$(2n + 1)\lambda/4 - \lambda/8 \leq d \leq (2n + 1)\lambda/4 + \lambda/8,$$

wobei n eine ganze Zahl mit $n \geq 0$ ist;
und dass die dritte und die vierte Antenne eine Achse definieren, die im Wesentlichen parallel zu D2 sein soll, und die um eine Strecke d' beabstandet sind, derart, dass dann, wenn $\lambda$ die Wellenlänge der Frequenz F von mehr als 300 MHz der Funkemissionen der Sender ist, d' die folgende Beziehung erfüllt:

$$(2n + 1)\lambda/4 - \lambda/8 \leq d' \leq (2n + 1)\lambda/4 + \lambda/8,$$

wobei n eine ganze Zahl mit $n \geq 0$ ist.

4. System nach Anspruch 3, wobei die dritte und die erste Kette zusammengefasst sind.

5. System nach einem der Ansprüche 3 und 4, wobei die Abstände d und d' im Wesentlichen gleich $\lambda/4$ sind.

6. System nach einem der Ansprüche 2 oder 5, wobei:

- dann, wenn die ersten Vergleichsmittel bestimmen, dass das von der ersten Antenne empfangene Funksignal in Bezug auf das von der zweiten Antenne empfangene Funksignal eine voreilende Phase hat, die Verarbeitungsmittel angeben, dass der Funksender in Bezug auf die Achse D1 auf Seiten der ersten Antenne angeordnet ist; und
- dann, wenn die ersten Vergleichsmittel bestimmen, dass das von der ersten Antenne empfangene Funksignal in Bezug auf das von der zweiten Antenne empfangene Funksignal eine nacheilende Phase besitzt, die Verarbeitungsmittel angeben, dass der Funksender in Bezug auf die Achse D1 auf Seiten der zweiten Antenne angeordnet ist.

7. System nach Anspruch 6, wobei dann, wenn die ersten Vergleichsmittel bestimmen, dass das von der ersten und von der zweiten Antenne empfangene Funksignal im Wesentlichen die gleiche Phase hat, die Verarbeitungsmittel angeben, dass der Funksender im Wesentlichen im gleichen Abstand von der ersten und von der zweiten Antenne angeordnet ist.

8. System nach einem der Ansprüche 5 bis 7, wobei:

- dann, wenn die zweiten Vergleichsmittel bestimmen, dass das von der dritten Antenne empfangene Funksignal in Bezug auf das von der vierten Antenne empfangene Funksignal eine voreilende Phase besitzt, die Verarbeitungsmittel angeben, dass der Funksender in Bezug auf die Achse D2 auf Seiten der dritten Antenne angeordnet ist; und

- dann, wenn die zweiten Vergleichsmittel bestimmen, dass das von der dritten Antenne empfangene Funksignal in Bezug auf das von der vierten Antenne empfangene Funksignal eine nacheilende Phase besitzt, die Verarbeitungsmittel angeben, dass der Funksender in Bezug auf die Achse D2 auf Seiten der vierten Antenne angeordnet ist.

9.  System nach Anspruch 8, wobei dann, wenn die zweiten Vergleichsmittel bestimmen, dass die von der dritten bzw. von der vierten Antenne empfangenen Funksignale im Wesentlichen die gleiche Phase haben, die Verarbeitungsmittel angeben, dass der Funksender im Wesentlichen im gleichen Abstand von der dritten und von der vierten Antenne angeordnet ist.

10. System nach einem der Ansprüche 5 bis 9, wobei die Verarbeitungsmittel nur dann angeben, dass der Funksender in Bezug auf die Achse D1 bzw. D2 auf Seiten einer gegebenen Antenne angeordnet ist, wenn die zweiten bzw. ersten Vergleichsmittel aufzeichnen, dass die von dem entsprechenden Antennenpaar empfangenen Signale im Wesentlichen die gleiche Phasenverschiebung haben.

11. System nach einem der Ansprüche 5 bis 10, wobei die Verarbeitungsmittel ein "Nullsignal" angeben, wenn sowohl die ersten als auch die zweiten Vergleichsmittel aufzeichnen, dass die von den entsprechenden Antennenpaaren empfangenen Signale im Wesentlichen gleichphasig sind.

12. System nach einem der Ansprüche 1 bis 11, wobei die Antennen eine schraubenlinienförmige Wicklung enthalten, derart, dass die abgewickelte Länge des Wicklungsdrahts im Wesentlichen gleich $\lambda/4$ ist.

13. System nach Anspruch 12, wobei die jeweiligen Achsen der Wicklungen der Antenne im Wesentlichen senkrecht zu den Achsen D1 und D2 sind.

14. System nach einem der Ansprüche 1 bis 13, wobei jede Empfangskette einen Verstärkungsbegrenzer enthält.

15. System nach einem der Ansprüche 1 bis 14, wobei jede Empfangskette darüber hinaus einen Frequenzmischer enthält, der mit einem gemeinsamen Hilfsoszillator mit Frequenz F2 für alle Funksignal-Empfangsketten enthält.

16. System nach einem der Ansprüche 1 bis 15, wobei eine der Funksignal-Empfangsketten der Lokalisierungsvorrichtung verwendet wird, um die von dem Radmodul-Sender zu der Zentraleinheit gelieferten Informationen zu empfangen und zu decodieren.

17. System nach einem der Ansprüche 1 bis 15, wobei eine komplementäre Empfangskette die Informationen, die von dem Radmodul-Sender zu der Zentraleinheit geliefert werden, empfängt und decodiert.

18. System nach einem der Ansprüche 1 bis 17, wobei die Lokalisierungsvorrichtung in dem Mittelteil des Daches des Fahrgastraums angeordnet ist.

**Fig. 1**

Fig. 2

Fig. 3(a)

Fig. 3(b)

Fig. 3

R1 & R2

**Fig. 4(a)**

R1  R2

**Fig. 4(b)**

R2  R1

**Fig. 4(c)**

**Fig. 4**

6    11    [ Filtre ]    12    [ Ampli limiteur ]

13

[ Comparateur de phase ]

7    11    [ Filtre ]    12    [ Ampli limiteur ]

15

16

[ Logique de détection et de position ]

[ Position émetteur ]

8    11    [ Filtre ]    12    [ Ampli limiteur ]

[ Comparateur de phase ]

9    11    [ Filtre ]    12    [ Ampli limiteur ]

14

**Fig. 5**

Fig. 6

Fig. 7

A    B

D1

D2

19

d'= λ/4    d= λ/4

21    20

C    D

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9420317 A
- WO 9706968 A

- US 5774047 A